# EUROPÄISCHE PATENTSCHRIFT

(11) **EP 3 455 539 B1**
(45) Veröffentlichungstag und Bekanntmachung des Hinweises auf die Patenterteilung: **23.09.2020**
(21) Anmeldenummer: 17716518.0
(22) Anmeldetag: 06.04.2017
(51) Int. Cl.: F16L 58/06, B05D 7/22, C04B 28/06, C04B 111/00

(54) **ROHR UND VERFAHREN ZUR HERSTELLUNG EINES ROHRS**
PIPE AND METHOD FOR PRODUCING A PIPE
TUYAU ET PROCÉDÉ DE FABRICATION D'UN TUYAU

(30) Priorität: 10.05.2016 DE 102016108584
(43) Veröffentlichungstag der Anmeldung: 20.03.2019
(73) Patentinhaber: Duktus (Production) GmbH, 35576 Wetzlar (DE)
(72) Erfinder: KARAU, Friedrich Wilhelm, 35578 Wetzlar (DE)
(74) Vertreter: Patentanwälte Olbricht Buchhold Keulertz
(86) Internationale Anmeldenummer: PCT/EP2017/058311
(87) Internationale Veröffentlichungsnummer: WO 2017/194248

(56) Entgegenhaltungen:
- AU-A- 3 681 293
- CN-A- 102 296 753
- CN-A- 104 832 720
- CN-A- 105 272 027
- US-A- 5 649 568
- Graybeal ET AL: "Ultra-High Performance Concrete", , 31. März 2011 (2011-03-31), XP055380476, Gefunden im Internet: URL:http://www.fhwa.dot.gov/publications/r esearch/infrastructure/structures/11038/11 038.pdf [gefunden am 2017-06-12]

## Beschreibung

Die Erfindung betrifft ein Rohr gemäß dem Oberbegriff von Anspruch 1, sowie ein Verfahren zur Herstellung eines Rohrs nach Anspruch 6.

An Rohre, wie beispielweise Abwasserrohre, werden hohe Anforderungen gestellt. So müssen Leitungen aus diesen Rohren nicht nur dicht sein, sondern auch korrosionsbeständig und verschleißfest. Aus Gusseisen hergestellte Rohre, im folgenden Rohre genannt, können diesen Anforderungen weitestgehend gerecht werden. Dennoch sind gerade die Korrosionsbeständigkeit und die Festigkeit gegenüber Verschleiß Lebensdauer-limitierende Faktoren.

Im Besonderen bei Leitungen aus Rohren, die Suspensionen, Abwässer mit Feststoffbeladung oder korrosive Medien führen, werden die inneren Mantelflächen der Rohre stark angegriffen. Zum Schutz der Rohre kann beispielsweise eine Auskleidung aus einer Bitumenmasse oder einem Gummi eingebracht werden, wie es in DE 832 799 C gezeigt wird.

EP 0 307 609 A1 beschreibt einen alternativen Verschleißschutz, wobei ein sogenannter Inliner aus einem thermoplastischen Kunststoff in ein Rohr eingeschoben und stoffschlüssig befestigt wird.

Allerdings sind Kunststoffauskleidungen, wie der Inliner, teuer und nur begrenzt haltbar gegenüber Abwässern mit Feststoffbeladung oder korrosiven Medien. Viele chemische Abwässer können die Kunststoffauskleidungen ablösen. Weiterhin ist ein Korrosionsschutz bei diesen Auskleidungen nur solange gegeben, wie eine vollständig geschlossene Kunststoffoberfläche vorhanden ist. Schon ein einzelner Kratzer in der Schutzschicht kann zur Korrosion des darunterliegenden Rohres führen. Auch Auskleidungen aus Bitumen weisen eine begrenzte Beständigkeit und Haltbarkeit auf.

Im Falle einer Verschleißschutzauskleidung mit einem Inliner, wie es in EP 0 307 609 A1 offenbart ist, ist zudem die Herstellung aufwendig und kostenintensiv.

Eine weitere Alternative ist die Auskleidung von Rohren mit einem zementgebundenen Werkstoff wie Zementmörtel, beziehungsweise Beton, wobei eine solche Auskleidung mit Beton häufig Inhomogenitäten aufweist. Diese Inhomogenitäten sind mitunter bedingt durch stark unterschiedliche Korngrößen der einzelnen Bestandteile zueinander. Die Inhomogenitäten führen dazu, dass solche Auskleidungen nur wenig verschleißbeständig sind.

DE 10 2013 114 824 A1 beschreibt einen Ultrahochfesten Beton (UHPC) der gegenüber herkömmlichen zementgebundenen Werkstoffen verbesserte Materialeigenschaften aufweist, wie beispielsweise eine erhöhte Druckfestigkeit und Härte. Aufgrund der selbstverdichtenden Eigenschaften und dem Entfall von zusätzlichem Armierungsstahl hat sich dieses Material als attraktiv im Bauwesen erwiesen.

US Patent US5649568 offenbart ein metallisches Rohr mit einer inneren Zementbeschichtung.

Aufgabe der Erfindung ist es, die bestehenden Nachteile des Standes der Technik zu beseitigen sowie ein Rohr bereitzustellen, das eine verbesserte Verschleißfestigkeit bei guter Beständigkeit gegenüber stoffhaltigen und aggressiven Medien aufweist. Zusätzlich soll das Rohr einen aktiven Korrosionsschutz aufweisen und kostengünstig herzustellen sein.

Darüber hinaus soll ein Verfahren zur Herstellung des erfindungsgemäßen Rohrs bereitgestellt werden.

Hauptmerkmale der Erfindung sind im kennzeichnenden Teil von Anspruch 1 und 6 angegeben. Ausgestaltungen sind Gegenstand der Ansprüche 2 bis 5 und 7 bis 10.

Bei einem Rohr mit einer inneren und einer äußeren Mantelfläche, wobei zumindest ein Teil der inneren Mantelfläche eine Beschichtung aufweist und die innere Mantelfläche und die Beschichtung kraftschlüssig miteinander verbunden sind, sieht die Erfindung vor, dass die Beschichtung Ultra-Hochfesten Beton aufweist.

Ultra-Hochfester Beton (UHPC) ist ein besonders gefügedichter Beton mit einem engen Kornband. Dabei wird ein Größtkorn eingesetzt, welches bevorzugt eine mittlere Korngröße von 0,1 mm bis 20 mm, besonders bevorzugt 0,1 bis 10 mm, aufweist. Zusätzlich zeichnet sich UHPC durch einen im Vergleich zu herkömmlichen Betonmischungen niedrigen Wasser-Zementwert aus. UHPC weist bevorzugt einen Wasser-Zementwert von 0,1 bis 0,4, besonders bevorzugt von 0,15 bis 0,25 auf.

Das Rohr weist einen metallischen Werkstoff auf, insbesondere ist das Rohr ein Gussrohr und/oder ein Stahlrohr. Diese Materialien weisen eine gute Beständigkeit und Härte auf, so dass Gussrohre und Stahlrohre vielseitig eingesetzt werden können.

Durch die Beschichtung der inneren Mantelfläche der Wandung eines Rohrs mit UHPC kann die Verschleißfestigkeit verbessert werden. Weiterhin weist UHPC durch seine hohe Härte eine gute Beständigkeit gegenüber feststoffhaltigen und aggressiven Medien auf und stellt zudem einen aktiven Korrosionsschutz des Rohres dar. Das enge Kornband, die geringe Korngröße und der geringe Wasser-Zementwert des UHPCs ermöglichen eine hochwertige Betonqualität. Die Beschichtung der inneren Mantelfläche des Rohrs mit UHPC führt zu einer verschleißfesten Betonbeschichtung mit verbessertem Kornverbund, der nur wenige Inhomogenitäten, wie beispielweise Luftporen, Kapillarporen oder eine graduelle Korngrößenverteilung, aufweist. Dieses verbessert sowohl die Verschleißfestigkeit als auch den passiven Korrosionsschutz. Zudem ist Beton alkalisch und dient als aktiver Korrosionsschutz, das heißt solange das Gusseisen mit Beton beschichtet ist, auch wenn dieser geringe Schäden beispielweise in Form von Rissen oder Poren aufweist, wird ein Rosten des Eisens gehemmt.

Zusätzlich ist eine solche Beschichtung der inneren Mantelfläche eines Rohrs kostengünstiger herzustellen als beispielweise eine Kunststoffbeschichtung oder ein separater Inliner.

Erfindungsgemäß weist der Ultra-Hochfeste Beton mindestens eine Druckfestigkeit von 150 N/mm² auf. Besonders bevorzugt weist der UHPC eine Druckfestigkeit von 180 bis 230 N/mm² auf. Die Druckfestigkeit einer solchen UHPC-Beschichtung kann aber auch deutlich höher sein. Der Druckfestigkeitswert sorgt für eine die sehr gute Verschleißfestigkeit und Beständigkeit des UHPCs.

In einer bevorzugten Ausgestaltung ist der Ultra-Hochfeste Beton mindestens aus einem Zement, einer Gesteinskörnung und einem Feinzusatzstoff ausgebildet. Als Zement können beispielweise Hochofenzement oder Tonerdezement eingesetzt werden. Der Einsatz von Hochofenzement führt zu qualitativ hochwertigen UHPC-Baustücken. Die Verwendung der Alternative des Tonerdezements erzeugt eine bessere Säurebeständigkeit des UHPCs. Die Gesteinskörnung kann beispielweise Quarzsand aufweisen, welcher den Zuschlagstoff mit Größtkorn darstellen kann. Als Feinzusatzstoffe werden bevorzugt Quarzmehl und/oder amorphes Siliciumdioxid eingesetzt. Der Feinzusatzstoff weist dabei bevorzugt eine mittlere Korngröße von kleiner 0,125 mm auf. Quarzmehl weist eine bevorzugte mittlere Korngröße von 50 bis 100 µm auf. Die mittlere Korngröße von Quarzmehl kann insbesondere auch deutlich unter 50 µm liegen. Amorphes Siliciumdioxid weist eine bevorzugte mittlere Korngröße von 0,1 bis 0,3 µm auf.

Zur Herstellung des UHPCs werden bevorzugt mindestens Zement, Gesteinskörnung und Feinzusatzstoff mit Wasser vermengt. Der Zement hydratisiert und bildet zusammen mit der Gesteinskörnung und dem Feinzusatzstoff einen festen, homogenen Beton. Dabei ist von Vorteil, dass kein überschüssiges Wasser ausgetrieben oder der Beton langen Hydratisierungszeiten unterzogen werden muss. Durch die Kombination von basischem Zement und saurem amorphen Siliciumdioxid wird eine extrem feste Kornbindung erhalten, die auf der Ausbildung von Mischkristallen basiert.

Erfindungsgemäß weist die Beschichtung der inneren Mantelfläche eine Stärke von 1 bis 50 mm, insbesondere eine Stärke von 5 bis 25 mm auf. Eine solche Stärke der Beschichtung, welches der Dicke der Schicht in Radialrichtung entspricht, ermöglicht eine dauerhafte Verschleißbeständigkeit und einen anhaltenden Korrosionsschutz. Bevorzugt bedeckt die Beschichtung die gesamte innere Mantelfläche. Die Beschichtung der inneren Mantelfläche bildet somit eine geschlossene Schicht aus, wodurch das gesamte Rohr gegen Verschleiß und Korrosion geschützt ist.

In einer bevorzugten Fortbildung der Erfindung weist der Ultra-Hochfeste Beton Siliciumcarbid auf. Siliciumcarbid erhöht die Härte und somit die Verschleißfestigkeit des UHPCs zusätzlich. Bevorzugt ist die im Ultra-Hochfesten Beton enthaltene Gesteinskörnung mit 1 bis 10 % Siliciumcarbid, insbesondere 4 bis 7 % Siliciumcarbid substituiert. Die Substitution eines solchen Anteils an Gesteinskörnung durch Siliciumcarbid ermöglicht zum einen eine möglichst hohe Härte und Verschleißbeständigkeit, zum anderen wird der Zusammenhalt der einzelnen Bestandteile des UHPCs zueinander aufrechterhalten.

In einer bevorzugten Ausgestaltung weist das Rohr auf zumindest einem Teil der äußeren Mantelfläche eine zweite Beschichtung auf. Diese Beschichtung ist bevorzugt kraftschlüssig mit der äußeren Mantelfläche verbunden. Bevorzugte zweite Beschichtungen der äußeren Mantelfläche sind Bitumen, verschiedene Betonarten, UHPC, Epoxidharz, Polyurethan, Acryllack und/oder Polyethylen. Auch eine zweite Beschichtung aus mehreren Materialien und/oder mehreren Schichten aus gleichen und/oder unterschiedlichen Materialien ist möglich.

Bevorzugt bedeckt die zweite Beschichtung die gesamte äußere Mantelfläche. Die zweite Beschichtung der äußeren Mantelfläche bildet somit eine geschlossene Schicht aus, wodurch das gesamte Rohr gegenüber äußeren Einwirkungen geschützt ist.

Bei einer bevorzugten Fortbildung der Erfindung weist das Rohr an mindestens einem Ende eine Verbindungsanordnung auf. Diese Verbindungsanordnung kann beispielweise eine Muffe und/oder ein Nippel sein, die in einer Muffenverbindung fluiddicht verbunden werden können. Dabei sind sowohl längskraftschlüssige Muffenverbindungen als auch nichtlängskraftschlüssige Muffenverbindungen herstellbar. Die Muffen können bevorzugt Schraubmuffen, Steckmuffen und/oder Stopfbuchsenmuffen sein.

Die Erfindung betrifft außerdem ein Verfahren zur Herstellung eines Rohrs in einer der vorher beschriebenen Ausführungsformen, wobei mindestens Zement, Gesteinskörnung und Feinzusatzstoff des Ultra-Hochfesten Betons mit Wasser vermengt werden, wobei frischer Ultra-Hochfester Beton erhalten wird, der in das Rohr eingebracht wird.

Mögliche Materialien für Zement sind Hochofenzement und/oder Tonerdezement. Als Gesteinskörnung kann beispielweise Quarzsand eingesetzt werden, welcher den Zuschlagstoff mit Größtkorn darstellt. Der Feinzusatzstoffe weist bevorzugt Quarzmehl (mittlere Korngröße von 20 bis 100 µm) und/oder amorphes Siliciumdioxid (mittlere Korngröße von kleiner 0,125 mm, besonders bevorzugt 0,1 bis 0,3 µm) auf. Die trockenen UHPC-Bestandteile werden im Zwangsmischer mit Wasser vermengt, wobei bevorzugt ein teigartiger, frischer UHPC erhalten wird, der verarbeitbar ist.

Der frische Ultra-Hochfeste Beton weist vor dem Einbringen in das Rohr einen Wasser-Zementwert von 0,1 bis 0,4, bevorzugt von 0,15 bis 0,25 auf. Bei diesen Wasser-Zement-Verhältnissen kann sichergestellt werden, dass genügend Wasser vorhanden ist, damit der Zement ausreichend hydratisiert und die weiteren Bestandteile des UHPCs fest mit einbindet. Dabei wird ein Betongefüge mit guter Härte und nur geringer Porenanzahl erhalten. Der frische UHPC hat, bei Zugabe der für die Einhaltung der bevorzugten Wasser-Zementwerte notwendigen Wassermenge, eine teigartige Konsistenz. Dieses ermöglicht eine einfache Verarbeitung des frischen UHPCs und Herstellung eines erfindungsgemäßen Rohrs. Dabei erfolgt keine Auftrennung der Teilchen nach ihrer Größe, wie es von herkömmlichen Betonmischungen bekannt ist. Dieses ermöglicht eine homogene Beschichtung ohne Störfaktoren, wie Inhomogenität und Kapillarporen, wodurch ein verschleißfestes, korrosionsbeständiges Rohr erhalten wird.

Zudem ist die Herstellung eines solchen Rohrs nach dem erfindungsgemäßen Verfahren kostengünstig durchzuführen.

In einer bevorzugten Ausgestaltung wird den festen Bestandteilen des UHPCs, Zement, Gesteinskörnung und Feinzusatzstoff, ein Verflüssiger zugegeben. Dieser Verflüssiger kann beispielweise auf einem Polycarboxylat basieren. Bevorzugt weist der Verflüssiger Polycarboxylatether auf. Die damit erzielbare Konsistenz kann von erdfeucht bis selbstverdichtend variieren, wobei die Wassermenge konstant niedrig gehalten werden kann.

In einer bevorzugten Ausführungsform wird frischer Ultra-Hochfester Beton in das Rohr eingebracht und mittels Rotation des Rohrs gleichmäßig auf der inneren Mantelfläche des Rohrs verteilt. Dadurch kann eine homogene Beschichtung der inneren Mantelfläche mit einer gleichmäßigen Stärke der Schicht in Umfangsrichtung erreicht werden. Die Rotation des Rohrs erfolgt dabei bevorzugt um eine im Wesentlichen horizontale Achse des Rohres, wodurch eine gleichmäßige Stärke der Beschichtung in axialer und radialer Richtung des Rohres erreicht wird.

In optionalen Ausführungsformen kann das Rohr vor, während und nach dem Einbringen des frischen UHPCs rotiert werden oder erst nach dem Einbringen des frischen UHPCs.

Bei herkömmlichem Betonen wird pastöser Frischbeton ins Rohr eingebracht und mittels Rotation über die innere Mantelfläche verteilt. Zusätzlich wird dabei überschüssiges Wasser ausgetrieben. Durch die Rotation erfolgt eine Auftrennung von Feinanteilen und Grobanteilen, wobei die Grobanteile nach außen an die Wandung gedrückt werden. Dadurch weist die Oberfläche der Beschichtung, in Richtung des Rohrinneren, vermehrt Feinanteile auf. Es entstehen Inhomogenitäten und Kapillarporen. Dieses trägt zur Festigkeitsverminderung bei und reduziert die Beständigkeit und den Korrosionsschutz. Diese Nachteile werden bei der Verwendung von UHPC mit erfindungsgemäß geringen Wasser-Zementwerten verhindert, wodurch die Eigenschaften einer solchen Beschichtung deutlich verbessert sind.

In einer bevorzugten Fortbildung wird der frische Ultra-Hochfeste Beton mittels einer Exzenterschneckenpumpe mit einer Lanze in das rotierende Rohr eingebracht, wobei die Lanze beim Einbringen des frischen Ultra-Hochfeste Betons aus dem Rohr gezogen wird. Je nach Eintragungsmenge an frischen UHPC pro Zeiteinheit und Geschwindigkeit mit der die Lanze aus dem Rohr gezogen wird, kann eine gleichmäßige Beschichtung mit entsprechend notwendiger und gewünschter Stärke erreicht werden.

In einer bevorzugten Ausgestaltung des Verfahrens zur Herstellung eines Rohrs wird nach Einbringen und Verteilung des frischen Ultra-Hochfesten Betons an der inneren Mantelfläche des Rohrs eine Drehzahl des Rohres erhöht, wobei die Beschichtung aus UHPC verdichtet und geglättet wird. Im Gegensatz zu herkömmlichen Betonmischungen dient die Erhöhung nicht dem Austreiben von Wasser sondern ausschließlich der Verdichtung und Glättung der UHPC-Beschichtung. Der Zement hydratisiert und schafft dadurch als Bindemittel eine beständige und verschleißfeste Verbindung der Betonbestandteile zueinander. Da bei der Beschichtung mit UHPC keine hohen Wassermengen eingesetzt werden müssen, brauchen keine langen Hydratisierungszeiten eingehalten werden. Die mit UHPC beschichteten Rohre sind bereits nach drei Tagen transportfähig und haben nach einem Monat eine ausreichende Wandfestigkeit erreicht.

Durch das Verdichten und Glätten der Beschichtung wird die Verschleißbeständigkeit verbessert. Mögliche hervorstehende Partikel und/oder Unebenheiten, einer auf der inneren Mantelfläche eines Rohrs aufgebrachten Betonbeschichtung, bei einer feststoffführenden Fluidleitung, sind vermehrten Kollisionen mit Feststoffpartikeln im Fluid ausgesetzt. Dadurch weisen diese Stellen einen erhöhten Verschleiß auf. Dieses kann reduziert und verhindert werden, indem eine möglichst glatte und ebene Oberfläche geschaffen wird. Dieses kann durch die Erhöhung der Drehzahl des Rohres erreicht werden. Zusätzlich dazu wird der frische Beton verdichtet, welches mögliche Lufteinschlüsse vermindert und die Betonqualität verbessert.

In einer bevorzugten Fortbildung des Verfahrens wird zumindest ein Anteil der im Ultra-Hochfesten Beton eingesetzten Gesteinskörnung, zum Beispiel Quarzsand, mit Siliciumcarbid ersetzt. In einer alternativen Ausgestaltung wird zumindest ein Anteil des eingesetzten Quarzmehls mit Siliciumcarbid ersetzt. Insbesondere ist ein Ersatz von Anteilen des Quarzsands und des Quarzmehls mit Siliciumcarbid bevorzugt. Siliciumcarbid erhöht die Härte und somit die Verschleißbeständigkeit des UHPC zusätzlich. Bevorzugt ist die im Ultra-Hochfesten Beton enthaltene Gesteinskörnung und/oder der Feinzusatzstoff mit 1 bis 10 % Siliciumcarbid, insbesondere 4 bis 7 % Siliciumcarbid substituiert. Die Substitution eines solchen Anteils an Gesteinskörnung durch Siliciumcarbid ermöglicht zum einen eine möglichst hohe Härte und Verschleißbeständigkeit, zum anderen wird der Zusammenhalt der einzelnen Bestandteile des UHPCs zueinander aufrechterhalten.

Spezielle Ausgestaltungsvarianten und die damit verbundenen Vorteile des Rohrs und des Verfahrens zu dessen Herstellung, welche jeweils im Zusammenhang mit einem der anderen genannten Erfindungsgegenstände beschrieben sind, gelten jeweils auch für die anderen erfindungsgemäßen Gegenstände.

Weitere Merkmale, Einzelheiten und Vorteile der Erfindung ergeben sich aus dem Wortlaut der Ansprüche sowie aus der folgenden Beschreibung von Ausführungsbeispielen.

Tabelle 1 zeigt Beispiel 1 mit bevorzugten Gewichtsanteilen der einzelnen Bestandteile der Beschichtung der inneren Mantelfläche des Rohrs aus UHPC. Die genannten Bestandteile werden in den entsprechenden bevorzugten Gewichtsanteilen vermengt und der frische UHPC wird in das Rohr eingebracht. Nach dem erfindungsgemäßen Verfahren wird mit einer dieser Zusammensetzungen ein Rohr mit einer erfindungsgemäßen verschleißfesten und beständigen Beschichtung erhalten.

**Tabelle 1: Beispiel 1 - bevorzugte Zusammensetzung der Beschichtung aus UHPC**

| **Bestandteile** | **bevorzugte Gewichtsanteile [%]** |
|---|---|
| Zement | 20 - 30 |
| Gesteinskörnung | 45 - 60 |
| Feinzusatzstoffe | 5 - 20 |
| Verflüssiger | 0 - 1 |
| Wasser | 2 - 12 |

Tabelle 2 zeigt ein spezielles Beispiel (Beispiel 2) einer Zusammensetzung einer Beschichtung der inneren Mantelfläche des Rohrs aus UHPC. Der Zement in Beispiel 2 kann ein Hochofenzement sein, bevorzugt des Typs CEM III/A (z.B. Variodur® 50, 52,5 N, von Dyckerhoff). Als Gesteinkörnung kann Quarzsand eingesetzt werden, beispielweise des Typs G32 mit einer mittleren Korngröße von 0,28 mm (Quarzwerke®). Als Feinzusatzstoff können sowohl Quarzmehl, zum Beispiel Millisil®-Mehl des Typs W3 (Quarzwerke®) mit einer mittleren Korngröße von 0,09 mm, als auch amorphes Siliciumdioxid, zum Beispiel Silicoll P® (Sika®) mit einer Primärkörnung von 0,1 bis 0,3 µm, eingesetzt werden. Im Beispiel 2 werden beide Feinzusatzstoffe in Kombination eingesetzt. Das amorphe Siliciumdioxid dient dabei neben dem Zement als Bindemittel. Als Verflüssiger ist Polycaboxylatether, beispielweise Viskocrete® 2810, eingesetzt.

**Tabelle 2: Beispiel 2 - exemplarische Zusammensetzung einer Beschichtung aus UHPC**

| **Bestandteile** | **Gewichtsanteil [%]** |
|---|---|
| Zement: Hochofenzement | 26,3 |
| Gesteinskörnung: Quarzsand | 52,5 |
| Feinzusatzstoffe: Quarzmehl | 6,7 |
| Feinzusatzstoffe: amorphes Siliciumdioxid | 5,1 |
| Verflüssiger: Polycarboxylatether | 0,2 |
| Wasser | 9,3 |

Tabelle 3 zeigt ein spezielles Beispiel (Beispiel 3) einer Zusammensetzung einer Beschichtung der inneren Mantelfläche des Rohrs aus UHPC mit Siliciumcarbid. Der Zement in Beispiel 3 kann beispielweise ein Hochofenzement sein. Als Gesteinkörnung wird bevorzugt Quarzsand eingesetzt. Als Feinzusatzstoff können sowohl Quarzmehl als auch amorphes Siliciumdioxid eingesetzt werden. Im Beispiel 3 werden beide Feinzusatzstoffe in Kombination eingesetzt. Das eingesetzte Siliciumcarbid weist eine Korngröße von 255 - 350 µm auf. Als Verflüssiger kann bevorzugt Polycaboxylatether zugegeben werden, wobei der Gewichtsanteil in Abhängigkeit der Temperatur variieren kann.

**Tabelle 3: Beispiel 3 - exemplarische Zusammensetzung einer Beschichtung aus UHPC mit Siliciumcarbid**

| **Bestandteile** | **Gewichtsanteil [%]** |
|---|---|
| Zement: Hochofenzement | 26,1 |
| Gesteinskörnung: Quarzsand | 46,9 |
| Feinzusatzstoffe: Quarzmehl | 7,3 |
| Feinzusatzstoffe: amorphes Siliciumdioxid | 5,0 |
| Siliciumcarbid | 5,2 |
| Verflüssiger: Polycarboxylatether | 0,2 |
| Wasser | 9,2 |

Die Erfindung ist nicht auf eine der vorbeschriebenen Ausführungsformen beschränkt, sondern in vielfältiger Weise abwandelbar.

## Patentansprüche

1. Rohr mit einer inneren und einer äußeren Mantelfläche, wobei zumindest ein Teil der inneren Mantelfläche eine Beschichtung aufweist und die innere Mantelfläche und die Beschichtung kraftschlüssig miteinander verbunden sind, wobei die Beschichtung eine Stärke von 1 bis 50 mm, insbesondere eine Stärke von 5 bis 25 mm aufweist, wobei das Rohr einen metallischen Werkstoff aufweist, **dadurch gekennzeichnet, dass** die Beschichtung Ultra-Hochfesten Beton aufweist, wobei der Ultra-Hochfeste Beton eine Druckfestigkeit von mindestens 150 N/mm² aufweist und der frische Ultra-Hochfeste Beton vor dem Einbringen in das Rohr einen Wasser-Zementwert von 0,1 bis 0,4, bevorzugt von 0,15 bis 0,25 aufweist.

2. Rohr nach Anspruch 1, **dadurch gekennzeichnet, dass** der Ultra-Hochfeste Beton mindestens aus einem Zement, einer Gesteinskörnung und einem Feinzusatzstoff ausgebildet ist.

3. Rohr nach einem der vorangegangenen Ansprüche, **dadurch gekennzeichnet, dass** der Ultra-Hochfeste Beton Siliciumcarbid aufweist.

4. Rohr nach einem der vorangegangenen Ansprüche, **dadurch gekennzeichnet, dass** die im Ultra-Hochfesten Beton enthaltene Gesteinskörnung mit 1 bis 10 % Siliciumcarbid, insbesondere 4 bis 7 % Siliciumcarbid substituiert ist.

5. Rohr nach einem der vorangegangenen Ansprüche, **dadurch gekennzeichnet, dass** das Rohr auf zumindest einem Teil der äußeren Mantelfläche eine zweite Beschichtung aufweist.

6. Verfahren zur Herstellung eines Rohrs nach einem der vorangegangenen Ansprüche, **dadurch gekennzeichnet, dass** mindestens Zement, Gesteinskörnung und Feinzusatzstoff des Ultra-Hochfesten Betons mit Wasser vermengt werden, wobei frischer Ultra-Hochfester Beton erhalten wird, der in das Rohr eingebracht wird.

7. Verfahren zur Herstellung eines Rohrs nach Anspruch 6, **dadurch gekennzeichnet, dass** frischer Ultra-Hochfester Beton in das Rohr eingebracht und mittels Rotation des Rohrs auf der inneren Mantelfläche des Rohrs verteilt wird.

8. Verfahren zur Herstellung eines Rohrs nach einem der Ansprüche 6 und 7, **dadurch gekennzeichnet, dass** nach einem Einbringen und Verteilung des frischen Ultra-Hochfesten Betons an der inneren Mantelfläche des Rohrs eine Drehzahl des Rohres erhöht wird, wobei die Beschichtung aus Ultra-Hochfestem Beton verdichtet und geglättet wird.

9. Verfahren zur Herstellung eines Rohrs nach einem der Ansprüche 6 bis 8, **dadurch gekennzeichnet, dass** zumindest ein Anteil des im Ultra-Hochfesten Beton eingesetzten Quarzsandes und/oder Quarzmehls mit Siliciumcarbid ersetzt wird.

10. Verfahren zur Herstellung eines Rohrs nach einem der Ansprüche 6 bis 9, **dadurch gekennzeichnet, dass** die im Ultra-Hochfesten Beton enthaltene Gesteinskörnung und/oder der Feinzusatzstoff mit 1 bis 10 % Siliciumcarbid, insbesondere 4 bis 7 % Siliciumcarbid substituiert ist.

## Claims

1. Pipe having an inner and an outer lateral surface, wherein at least part of the inner lateral surface has a coating and the inner lateral surface and the coating are non-positively engaged with one another, wherein the coating has a thickness of 1 to 50 mm, in particular a thickness of 5 to 25 mm, wherein
the pipe has a metallic material, **characterised in that** the coating has ultra-high strength concrete, wherein the ultra-high strength concrete has a compressive strength of at least 150 N/mm² and the fresh ultra-high strength concrete, before introduction into the pipe, has a water-cement value of 0.1 to 0.4, preferably of 0.15 to 0.25.

2. Pipe according to claim 1, **characterised in that** the ultra-high strength concrete is formed at least from a cement, an aggregate and a fine additive.

3. Pipe according to any of the preceding claims, **characterised in that** the ultra-high strength concrete has silicon carbide.

4. Pipe according to any of the preceding claims, **characterised in that** the aggregate contained in the ultra-high strength concrete is substituted with 1 to 10% silicon carbide, in particular 4 to 7% silicon carbide.

5. Pipe according to any of the preceding claims, **characterised in that** the pipe has a second coating on at least part of the outer lateral surface.

6. Method for producing a pipe according to any of the preceding claims, **characterised in that** at least cement, aggregate and fine additive of the ultra-high strength concrete are mixed with water, wherein fresh ultra-high strength concrete is obtained and is introduced into the pipe.

7. Method for producing a pipe according to claim 6, **characterised in that** fresh ultra-high strength concrete is introduced into the pipe and is distributed on the inner lateral surface of the pipe by means of rotation of the pipe.

8. Method for producing a pipe according to any of claims 6 and 7, **characterised in that,** after introduction and distribution of the fresh ultra-high strength concrete on the inner lateral surface of the pipe, a rotational speed of the pipe is increased, wherein the coating of ultra-high strength concrete is compacted and smoothed.

9. Method for producing a pipe according to any of claims 6 to 8, **characterised in that** at least a portion of the quartz sand and/or quartz powder used in the ultra-high strength concrete is replaced with silicon carbide.

10. Method for producing a pipe according to any of claims 6 to 9, **characterised in that** the aggregate contained in the ultra-high strength concrete and/or the fine additive is substituted with 1 to 10% silicon carbide, in particular 4 to 7% silicon carbide.

## Revendications

1. Tuyau avec une surface d'enveloppe intérieure et une extérieure, dans lequel au moins une partie de la surface d'enveloppe intérieure présente un revêtement et la surface d'enveloppe intérieure et le revêtement sont reliés par adhérence l'un à l'autre par complémentarité de force, le revêtement présentant une épaisseur de 1 à 50 mm, en particulier une épaisseur de 5 à 25 mm, le tuyau présentant un matériau métallique, **caractérisé en ce que** le revêtement présente du béton à ultra-haute résistance, le béton à ultra-haute résistance présentant une résistance à la compression d'au moins 150 N/mm² et le béton à ultra-haute résistance frais présentant un rapport eau/ciment de 0,1 à 0,4, de préférence de 0,15 à 0,25, avant d'être introduit dans le tuyau.

2. Tuyau selon la revendication 1, **caractérisé en ce que** le béton à ultra-haute résistance est formé au moins d'un ciment, d'un granulat et d'un additif fin.

3. Tuyau selon l'une quelconque des revendications précédentes, **caractérisé en ce que** le béton à ultra-haute résistance présente du carbure de silicium.

4. Tuyau selon l'une quelconque des revendications précédentes, **caractérisé en ce que** le granulat contenu dans le béton à ultra-haute résistance est substitué par 1 à 10 % de carbure de silicium, en particulier 4 à 7 % de carbure de silicium.

5. Tuyau selon l'une quelconque des revendications précédentes, **caractérisé en ce que** le tuyau présente un second revêtement sur au moins une partie de la surface d'enveloppe extérieure.

6. Procédé de fabrication d'un tuyau selon l'une quelconque des revendications précédentes, **caractérisé en ce qu'**au moins du ciment, un granulat et un additif fin de béton à ultra-haute résistance sont mélangés avec de l'eau, permettant d'obtenir un béton à ultra-haute résistance frais qui est introduit dans le tuyau.

7. Procédé de fabrication d'un tuyau selon la revendication 6, **caractérisé en ce que** du béton à ultra-haute résistance frais est introduit dans le tuyau et distribué sur la surface d'enveloppe intérieure du tuyau au moyen de la rotation du tuyau.

8. Procédé de fabrication d'un tuyau selon l'une quelconque des revendications 6 et 7, **caractérisé en ce qu'**une fois le béton à ultra-haute résistance frais introduit et distribué sur la surface d'enveloppe intérieure du tuyau, une vitesse de rotation du tuyau est augmentée, de sorte que le revêtement de béton à ultra-haute résistance est compacté et lissé.

9. Procédé de fabrication d'un tuyau selon l'une quelconque des revendications 6 à 8, **caractérisé en ce qu'**au moins une partie du sable de quartz et/ou de la poudre de quartz utilisés dans le béton à ultra-haute résistance est remplacée par du carbure de silicium.

10. Procédé de fabrication d'un tuyau selon l'une quelconque des revendications 6 à 9, **caractérisé en ce que** le granulat et/ou l'additif fin contenu dans le béton à ultra-haute résistance est substitué par 1 à 10 % de carbure de silicium, en particulier 4 à 7 % de carbure de silicium.
